# EUROPÄISCHE PATENTANMELDUNG

(11) **EP 1 895 137 A2**
(43) Veröffentlichungstag der Anmeldung: **05.03.2008**
(21) Anmeldenummer: 07010763.6
(22) Anmeldetag: 31.05.2007
(51) Int. Cl.: F02F 7/00

(54) **Anrodnung einer Kurbelwelle in einem Kurbelgehäuse einer Brennkraftmaschine**

(30) Priorität: 22.07.2006 DE 102006033975
(71) Anmelder: Dr.Ing.h.c. F. Porsche Aktiengesellschaft, 70435 Stuttgart (DE)
(72) Erfinder: Batzill, Manfred, 73765 Neuhausen (DE)

(57) **Zusammenfassung**

Die Erfindung schlägt eine Anordnung einer Kurbelwelle (3) in einem Kurbelgehäuse (1) einer Brennkraftmaschine vor. Die Kurbelwelle weist mindestens eine Kurbelwellenwange (7) als Massenausgleich auf. Die Kurbelwellenwange durchsetzt eine Ausnehmung (12) eines Lagerstuhls (2) des Kurbelgehäuses. Die Kurbelwellenwange (7) ist mit einem sich verjüngenden Ende versehen und der Lagerstuhl ist im Bereich des sich verjüngenden Endes der Kurbelwellenwange verstärkt ausgebildet.

Durch diese Anordnung ist ein spannungsgünstiger Ubergang der Anbindung des Lagerstuhls zum eigentlichen Kurbelgehäuse gewährleistet.

## Beschreibung

Die Erfindung betrifft eine Anordnung einer Kurbelwelle in einem Kurbelgehäuse einer Brennkraftmaschine.

Bei Brennkraftmaschinen finden Kurbelwellen Verwendung, die mindestens eine Kurbelwellenwange als Massenausgleich aufweisen. Die mindestens eine Kurbelwellenwange durchsetzt eine Ausnehmung eines Lagerstuhls des Kurbelgehäuses. Die Kurbelwelle selbst ist in mehreren Gleitlagern gelagert, die dem Lagerstuhl, insbesondere dem Hauptlagerstuhl der Brennkraftmaschine zugeordnet sind.

In der GB-PS 319,960 ist eine Kurbelwelle beschrieben, die mit mehreren Kurbelwellenwangen als Massenausgleich versehen ist. Die Kurbelwellenwangen sind mit sich verjüngenden Enden versehen. Eine entsprechende Gestaltung einer Kurbelwelle ist aus der US-PS 3,088,783 bekannt.

Aufgabe der vorliegenden Erfindung ist es, eine Anordnung einer Kurbelwelle in einem Kurbelgehäuse einer Brennkraftmaschine dahingehend zu optimieren, dass eine hohe Tragfähigkeit des Lagerstuhls gewährleistet ist.

Gelöst wird diese Aufgabe durch eine Anordnung einer Kurbelwelle in einem Kurbelgehäuse einer Brennkraftmaschine, wobei die Kurbelwelle mindestens eine Kurbelwellenwange als Massenausgleich aufweist, die eine Ausnehmung eines Lagerstuhls des Kurbelgehäuses durchsetzt, wobei die Kurbelwellenwange mit einem sich verjüngenden Ende versehen ist und der Lagerstuhl im Bereich des sich verjüngenden Endes der Kurbelwellenwange verstärkt ausgebildet ist. Durch diese Gestaltung kann die Tragfähigkeit des hoch belasteten Lagerstuhlbereichs optimiert werden, unter anderem unter dem Aspekt der Minimierung der Kerbwirkung durch weitgehend fließende Querschnittsübergänge im Lagerstuhlbereich. Als besonders vorteilhaft wird es angesehen, wenn das Ende der jeweiligen Kurbelwellenwange konisch oder gestuft verjüngt gestaltet ist. Entsprechend sollte der dem Ende der jeweiligen Kurbelwellenwange zugewandte Bereich des Lagerstuhls konisch oder gestuft erweitert gestaltet sein. Dies ermöglicht es, eine Lagerung der Kurbelwelle im Kurbelgehäuse darzustellen, bei der ein konstanter Spalt zwischen der jeweiligen Kurbelwellenwange und dem Lagerstuhl gebildet ist.

Gemäß einer vorteilhaften Weiterbildung der Anordnung ist vorgesehen, dass die Kurbelwelle beidseitig eines Pleuels Kurbelwellenwangen als Massenausgleich aufweist, die die Ausnehmung des Lagerstuhls durchsetzen, wobei die Kurbelwellenwangen mit sich verjüngenden Enden versehen sind und der Lagerstuhl im Bereich der sich verjüngenden Enden der Kurbelwellenwangen verstärkt ausgebildet ist. Die Enden der Kurbelwellenwangen sind insbesondere aufeinander zu konisch verjüngt gestaltet und es ist der Lagerstuhl konisch erweitert gestaltet, derart, dass zwischen der jeweiligen Kurbelwellenwange und dem Lagerstuhl ein Spalt im Wesentlichen konstanter Stärke gebildet ist. Statt der konischen Verjüngung kann auch eine gestufte Verjüngung vorgesehen sein, derart, dass die Enden der Kurbelwellenwangen aufeinander zu gestuft verjüngt gestaltet sind und der Lagerstuhl gestuft erweitert gestaltet ist, derart, dass zwischen der jeweiligen Kurbelwellenwange und dem Lagerstuhl ein Spalt im Wesentlichen konstanter Stärke gebildet ist.

Die erfindungsgemäße Anordnung ermöglicht somit, Spannungen im Übergang des Lagerstuhls zum eigentlichen Kurbelgehäuse zu reduzieren und damit die Dauerfestigkeit in diesem Bereich auf Grund des spannungsgünstigen Überganges zu gewährleisten.

Bevorzugte Weiterbildungen der Erfindung ergeben sich aus den Unteransprüchen und der nachfolgenden Beschreibung. Zwei Ausführungsbeispiele der Erfindung sind, ohne hierauf beschränkt zu sein, anhand der Zeichnungen näher erläutert. Dabei zeigt:
- Fig. 1: eine erste Ausführungsform der erfindungsgemäßen Anordnung, in einer Schnittdarstellung, veranschaulicht bei einem Boxermotor,
- Fig. 2: eine zweite Ausführungsform in einer Schnittdarstellung gemäß Fig. 1.

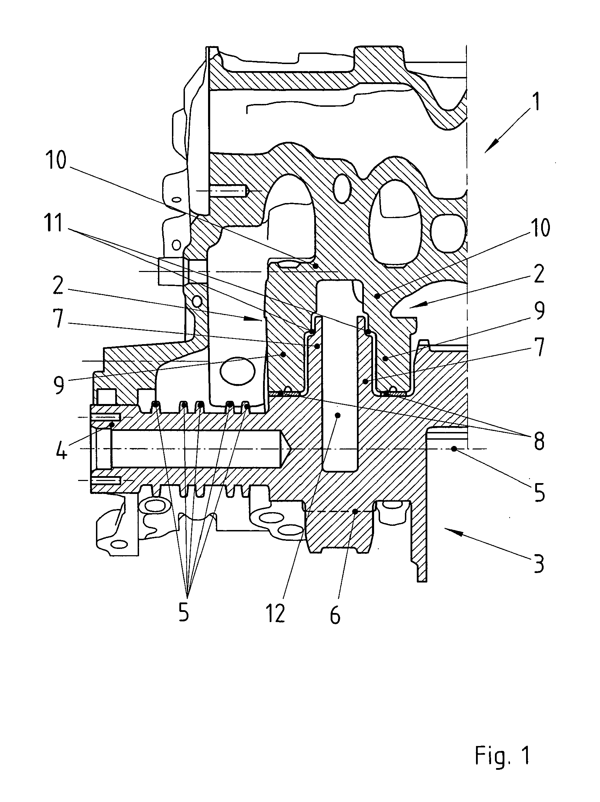

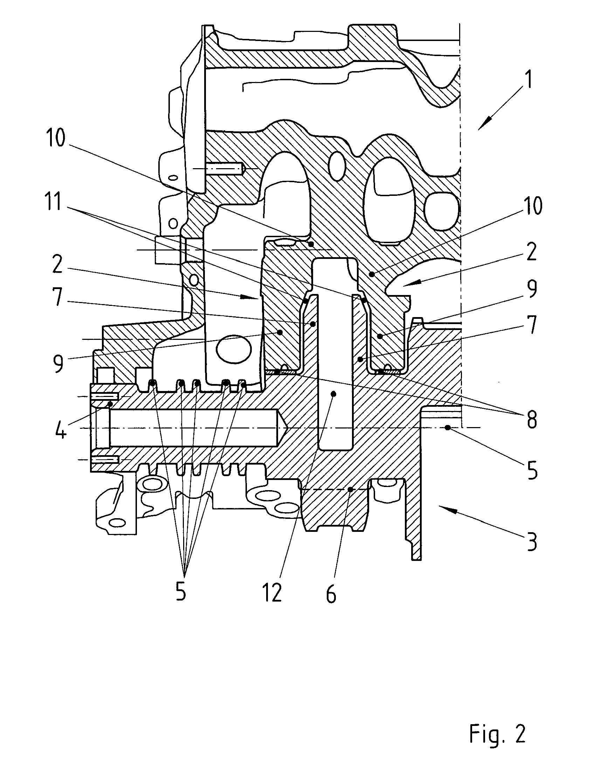

Die Schnittdarstellungen gemäß der Fig. 1 und 2 stellen einen geringfügig zur horizontalen geneigten Schnitt durch das Kurbelgehäuse 1, mit Bestandteil des Kurbelgehäuses 1 bildendem Lagerstuhl 2, bei dem es sich um einen Hauptlagerstuhl handelt, und durch die Kurbelwelle 3 dar. Gezeigt ist nur die Anordnung in einem endseitigen Bereich der Kurbelwelle 3, konkret des ersten Zylinders.

Die Kurbelwelle 3 weist einen endseitigen Ansatz 4 auf, der mit Zahnrädern 5 für den Antrieb der Kette der Ölpumpe des Boxermotors und für Steuerketten versehen ist. Die Rotationsachse der Kurbelwelle 3 ist mit der Bezugsziffer 5, die Lagerachse des nicht veranschaulichten großen Pleuelauges mit der Bezugsziffer 6 bezeichnet. Auf der dieser Lagerachse 6 abgewandten Seite ist die Kurbelwelle 3, bezogen auf den ersten Zylinder, mit zwei in Abstand zueinander angeordneten identischen Kurbelwellenwangen 7 als Massenausgleich versehen. Die aneinander zugewandten Flächen der Kurbelwellenwangen 7 sind parallel zueinander angeordnet und verlaufen senkrecht zur Rotationsachse 5. Der zwischen den beiden Kurbelwellenwangen 7 gebildeter Raum dient der Aufnahme des Pleuels des ersten Zylinders.

Die beiden Kurbelwellenwangen 7 sind im Bereich deren Enden, somit der Bereiche Kurbelwellenwangen 7, die der Rotationsachse 5 abgewandt sind, verjüngt ausgebildet. Die Kurbelwelle 3 ist, bezogen auf den dargestellten ersten Zylinder, über neben den Kurbelwellenwangen 7 angeordnete Gleitlager 8 im Lagerstuhl 2 gelagert, konkret in den beiden Aufnahmehälften 9 des Lagerstuhls 2. Diese Aufnahmehälften 9 sind über Stege 10 mit dem eigentlichen Kurbelgehäuse 1 verbunden. Entsprechend der Verjüngung der Enden der Kurbelwellenwangen 7 sind die Aufnahmehälften 9 des Lagerstuhls 2 verstärkt ausgebildet. Zwischen den Aufnahmehälften 9 ist eine Ausnehmung 12 für die Kurbelwellenwangen 7 gebildet.

Bei der ersten Ausführungsform gemäß der Fig. 1 sind die Enden der Kurbelwellenwangen 7 aufeinander zu gestuft verjüngt gestaltet und es ist der Lagerstuhl 2 gestuft erweitert gestaltet, derart, dass zwischen der jeweiligen Kurbelwellenwange 7 und dem Lagerstuhl 2, konkret der zugeordneten Aufnahmehälfte 9, ein Spalt 11 im Wesentlichen konstanter Stärke gebildet ist.

Bei der zweiten Ausführungsform gemäß der Darstellung in Fig. 2 wird demgegenüber die Verjüngung der Enden der Kurbelwellenwangen 7 und die Verstärkung des Lagerstuhls 2 in diesem Bereich dadurch bewirkt, dass die Enden der Kurbelwellenwangen 7 aufeinander zu konisch verjüngt gestaltet sind und der Lagerstuhl 2, konkret die Aufnahmehälften 9, konisch erweitert gestaltet sind, derart, dass zwischen der jeweiligen Kurbelwellenwange 7 und dem Lagerstuhl 2 ein Spalt 11 im Wesentlichen konstanter Stärke gebildet ist.

## Patentansprüche

1. Anordnung einer Kurbelwelle (3) in einem Kurbelgehäuse (1) einer Brennkraftmaschine, wobei die Kurbelwelle (3) mindestens eine Kurbelwellenwange (7) als Massenausgleich aufweist, die eine Ausnehmung (12) eines Lagerstuhls (2) des Kurbelgehäuses (1) durchsetzt, wobei die Kurbelwellenwange (7) mit einem sich verjüngenden Ende versehen ist und der Lagerstuhl (2) im Bereich des sich verjüngenden Endes der Kurbelwellenwange (7) verstärkt ausgebildet ist.

2. Anordnung nach Anspruch 1, wobei die Kurbelwelle (3) beidseitig eines Pleuels Kurbelwellenwangen (7, 7) als Massenausgleich aufweist, die die Ausnehmung (12) des Lagerstuhls (2) durchsetzen, wobei die Kurbelwellenwangen (7, 7) mit sich verjüngenden Enden versehen sind und der Lagerstuhl (2) im Bereich der sich verjüngenden Enden der Kurbelwellenwangen (7, 7) verstärkt ausgebildet ist.

3. Anordnung nach Anspruch 1 oder 2, wobei das Ende der jeweiligen Kurbelwellenwange (7) konisch oder gestuft verjüngt gestaltet ist.

4. Anordnung nach einem der Ansprüche 1 bis 3, wobei der dem Ende der jeweiligen Kurbelwellenwange (7) zugewandte Bereich des Lagerstuhls (2) konisch oder gestuft erweitert gestaltet ist.

5. Anordnung nach Anspruch 3 oder 4, wobei die Enden der Kurbelwellenwangen (7, 7) aufeinander zu konisch verjüngt gestaltet sind und der Lagerstuhl (2) konisch erweitert gestaltet ist, derart, dass zwischen der jeweiligen Kurbelwellenwange (7) und dem Lagerstuhl (2) ein Spalt (11) im Wesentlichen konstanter Stärke gebildet ist.

6. Anordnung nach Anspruch 3 oder 4, wobei die Enden der Kurbelwellenwangen (7, 7) aufeinander zu gestuft verjüngt gestaltet sind und der Lagerstuhl (2) gestuft erweitert gestaltet ist, derart, dass zwischen der jeweiligen Kurbelwellenwange (7) und dem Lagerstuhl (2) ein Spalt (11) im Wesentlichen konstanter Stärke gebildet ist.
